# EUROPÄISCHE PATENTANMELDUNG

(11) **EP 3 584 895 A1**
(43) Veröffentlichungstag der Anmeldung: **25.12.2019**
(21) Anmeldenummer: 19175852.3
(22) Anmeldetag: 22.05.2019
(51) Int. Cl.: H01T 13/54, H01T 13/46

(54) **VORKAMMERZÜNDVORRICHTUNG ZUM ENTZÜNDEN EINES KRAFTSTOFF-LUFT-GEMISCHES**

(30) Priorität: 19.06.2018 CH 7832018
(71) Anmelder: Liebherr-Machines Bulle SA, 1630 Bulle (CH)
(72) Erfinder: Xu, Guoqing, 1630 Bulle (CH)
(74) Vertreter: Laufhütte, Dieter

(57) **Zusammenfassung**

Die Erfindung betrifft eine Vorkammerzündvorrichtung zum Entzünden eines Kraftstoff-Luft-Gemisches, umfassend eine Vorkammer zum Aufnehmen eines Kraftstoff-Luft-Gemisches, und eine Zündelektrode, die in der Vorkammer angeordnet ist, wobei eine Innenwand der Vorkammer eine Massenelektrode für die Zündelektrode darstellt, so dass ein Überschlag zwischen der Massenelektrode und der Zündelektrode erzeugbar ist, **dadurch gekennzeichnet, dass** die Zündelektrode die Form eines Rahmens, vorzugsweise eines Rings, besitzt.

## Beschreibung

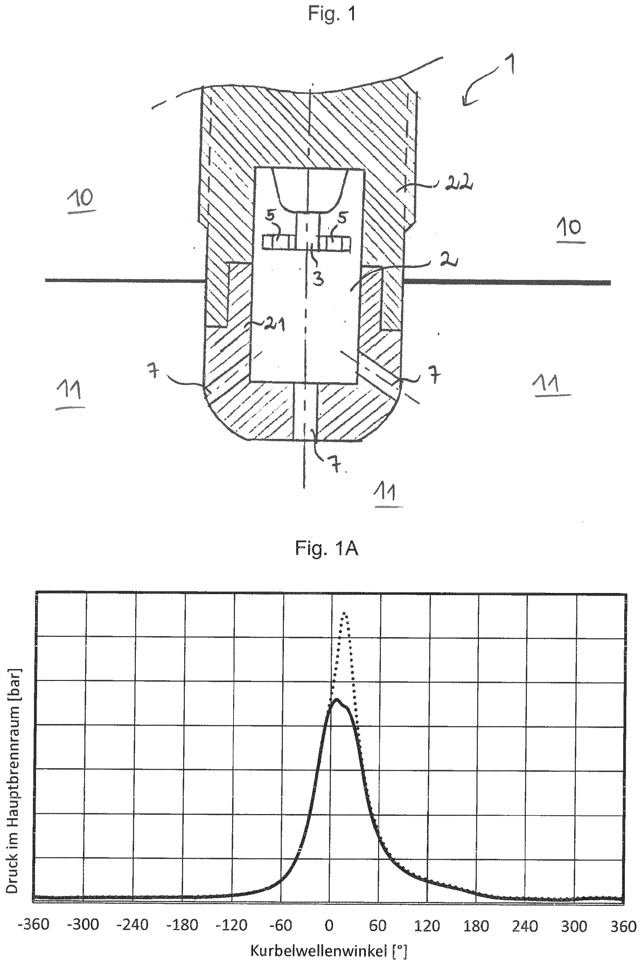

Die vorliegende Erfindung betrifft eine Vorkammerzündvorrichtung zum Entzünden eines Kraftstoff-Luft-Gemisches, insbesondere eine Vorkammerkerze. Bei einer Brennkraftmaschine ist dabei die Vorkammer ein von einem Hauptbrennraum eines Zylinders abgetrennter Bereich, in dem die Entzündung des Kraftstoffs erfolgt. Über entsprechende Kanäle, die Schusskanäle oder auch Überströmungskanäle genannt werden, schießt das in der Vorkammer entzündete Gemisch in die Hauptbrennkammer, was eine dortige Entzündung des darin befindlichen Kraftstoff-Luft-Gemisches auslöst. Die dabei entstehende Expansion des Gemisches wird über einen beweglichen Kolben im Zylinder genutzt, um eine Kurbelwelle anzutreiben. Vorteilhaft an einer Vorkammerzündung ist, dass das in der Hauptbrennkammer befindliche Kraftstoff-Luft-Gemisch wegen eines wesentlich höheren und dennoch schnellen Energieeintrags mit einer erhöhten Zuverlässigkeit entflammt wird und sich damit die Verbrennung über das in der Hauptbrennkammer befindende Kraftstoff-Luft-Gemisch-Volumen wesentlich koordinierter fortsetzt als das mit einer direkt in der Hauptbrennkammer angeordneten Glüh- oder Zündkerze der Fall ist. Besondere Vorteile ergeben sich dabei für mit Gas betriebene Motoren. Nochmals höhere Vorteile ergeben sich bei besonders stark mit Luft verdünnten Kraftstoffen (im sogenannten Magerbetrieb) bzw. einen Betrieb der Brennkraftmaschine mit einem Flüssigkraftstoff oder einem Brenngas von geringerer Güte. Fig. 1A zeigt für einen im extremen Magerbetrieb arbeitenden Gasmotor exemplarisch zwei real durch eine sogenannte Zylinder-Indizierung gemessene Druckverläufe im Inneren eines Zylinders über jeweils einen 4-Takt Motorarbeitszyklus. Bei beiden Arbeitszyklen liegt eine gleiche Zuführung des Kraftstoff-Luft-Gemisches vor. Wie sehr deutlich zu erkennen, bestehen erhebliche Druckunterschiede. Die obere Kurve zeigt von etwa 100 aufgezeichneten Arbeitszyklen denjenigen Druckverlauf, bei der sich der maximale Druck ausgebildet hat. Entsprechend zeigt die untere Kurve den Verlauf der geringsten Druckentfaltung dieser aufgezeichneten Arbeitszyklen. Die Intensität der Druckentfaltung steht a) in einem unmittelbaren Zusammenhang mit der durch die Verbrennung freigesetzten Expansionsleistung und b) mit der während des Expansionsvorganges auf den Kolben aufgebrachten Kraft und damit der von der Brennkraftmaschine abgegebenen mechanischen Leistung . In Anbetracht des großen Unterschieds zwischen den beiden extremen Druckverlaufskurven wird die durch eine zuverlässigere Verbrennung zumindest potenziell erzielbare Wirkungsgradsteigerung sehr deutlich.

Im Wesentlichen gibt es zwei verschiedene Arten zur Umsetzung einer Vorkammer, wobei die erste das Vorsehen eines separaten die Vorkammer enthaltenden in den Zylinderkopf einzusetzenden Bauteils ist. Nach der zweiten Umsetzung ist eine Vorkammerkerze vorgesehen, die in ihrem Endabschnitt die Vorkammer enthält und lösbar in den Hauptbrennraum eines Zylinders angeordnet ist. Nach der zweiten Möglichkeit ist die Vorkammer also Bestandteil einer in den Motor einschraub- beziehungsweise eindrehbaren Zündkerze, deren Vorkammerkappe in den Hauptbrennraum eines Zylinders ragt.

In der Vorkammer ist eine Zündelektrode angeordnet, die durch einen erzeugbaren Spannungsüberschlag zu einer Masseelektrode, die typischerweise durch eine Innenwand der Vorkammer umgesetzt ist, das Kraftstoff-Luft-Gemisch entzündet. Aufgrund des Spannungsüberschlags kommt es dabei sowohl an der Zündelektrode als auch an der Massenelektrode unweigerlich zu Abnutzungseffekten, die einen Austausch der Zündelektrode nach einer gewissen Zündhäufigkeit erfordern. So kommt es durch das mehrmalige Auftreten des Spannungsüberschlags zu einer Verschlechterung der Leitfähigkeit an der Zündelektrodenoberfläche, die unter Umständen dafür sorgen kann, dass sich auch bei einer maximalen zur Verfügung stehenden Spannung zwischen der Zündelektrode und der Massenelektrode kein Überschlag mehr erzeugen lässt. Umgekehrt gibt es aber auch sogenannte brückenbauende Alterungseffekte, die zu einer partiellen Anhäufung von Material an der Zündelektrode führen können. Bei einer so verschlissenen Zündelektrode kann es unter Umständen auch dazu kommen, dass eine Funkenstrecke zu früh zur Massenelektrode gebildet wird, und folglich ein verfrühtes Entflammen des Kraftstoffs eintritt, was energetisch von Nachteil ist und zu einer schädlichen Beanspruchung von Bauteilen der Brennkraftmaschine führt (sogenanntes verfrühtes Misfiring). Ferner kann eine partielle Anhäufung von Material an der Zündelektrode auch zu einer Überbrückung des Zündkerzenisolators führen, was klarerweise auch einen Funktionsausfall der Zündkerze bewirkt.

Die US 5 554 908 zeigt eine aus dem Stand der Technik bekannte Vorkammerzündvorrichtung mit einer greifarmähnlichen Zündelektrode. Die vorstehend aufgeführten Nachteile lassen sich mit einer so ausgebildeten Zündelektrode jedoch nur unwesentlich abschwächen.

Es ist das Ziel der vorliegenden Erfindung eine Vorkammerzündvorrichtung zu schaffen, die eine wesentlich längere Lebensdauer besitzt als auf dem Markt verfügbare Vorkammerzündvorrichtungen.

Dies gelingt mit einer Vorkammerzündvorrichtung, die sämtliche Merkmale des unabhängigen Anspruchs 1 aufweist. Vorteilhafte Ausgestaltungen der Zündvorrichtung sind dabei in den abhängigen Ansprüchen aufgeführt.

Demnach umfasst die erfinderische Vorkammerzündvorrichtung zum Entzünden eines Kraftstoff-Luft-Gemisches eine Vorkammer zum Aufnehmen eines Kraftstoff-Luft-Gemisches, und eine Zündelektrode, die in der Vorkammer angeordnet ist, wobei eine Innenwand der Vorkammer eine Masseelektrode für die Zündelektrode darstellt, sodass ein als Zündfunke dienender Überschlag zwischen der Masseelektrode und der Zündelektrode erzeugbar ist. Die Zündelektrode ist dadurch gekennzeichnet, dass sie die Form eines Rahmens aufweist. Der Aussparung des Rahmens weist vorzugsweise eine solche Scheibenform auf, die über zwei flächige Seiten verfügt, deren Abstand zueinander gleich ist.

Vorzugsweise ist vorgesehen, dass die Zündelektrode die Form eines Ringes aufweist. Weiter kann vorgesehen sein, dass die Zündelektrode die Form einer Scheibe bspw. einer kreisförmigen Scheibe aufweist.

Nach einer weiteren Fortbildung der Erfindung kann vorgesehen sein, dass die Massenelektrode eine Ringform aufweist, und vorzugsweise die Zündelektrode koaxial zur Massenelektrode angeordnet ist. Dabei kann vorgesehen sein, dass die Innenwand der Vorkammer im Bereich um die Elektrode zylinderförmig ausgeformt ist.

So kann vorgesehen sein, dass der minimale Abstand von der ringförmigen Zündelektrode hin zu der ringförmigen Massenelektrode in Umfangsrichtung der scheibenförmigen Zündelektrode gleich ist. Dadurch ist die Gesamtfläche, an denen ein Zündfunken zwischen der Zündelektrode und der Massenelektrode überschlägt, größer als bei herkömmlich bekannten Formen von Zündelektroden. Der dabei jeweils punktuell am Austritts- beziehungsweise Eintrittsort des Zündfunkens auftretende Verschleiß wird über die Nutzungsdauer über einen größeren Flächenbereich verteilt und konzentriert sich nicht nur auf einen kleineren Flächenbereich, wie es im Stand der Technik üblich ist. Somit wird ein verschleißbedingter Austausch erst nach einer sehr viel größeren Anzahl von Überschlägen erforderlich, da die dabei auftretenden Verschleißeffekte über eine größere Fläche verteilt werden. Daraus wird ersichtlich, dass eine Ausdehnung der Zündelektrode über einen geschlossenen Umfang des Rahmens bzw. Ringes besonders vorteilhaft ist, wenngleich nicht zwingend.

Die Massenelektrode ist dabei typischerweise Bestandteil des die Vorkammer bildenden Gehäuses. In einem Bereich ist diese typischerweise zylinderförmig, sodass eine darin aufgenommener kreisförmiger Rahmen der koaxial zur Zylinderform der Vorkammer angeordnet ist, entlang seines Außenumfangs einen gleichbleibenden Abstand zu einer Innenwand der Vorkammer aufweist.

Klarerweise muss die rahmenförmige Zündelektrode mit dem Zündleiter der Zündkerze niederohmig verbunden sein. Selbstverständlich muss die Zündelektrode mechanisch fixiert sein. Bevorzugt wird zwischen der Zündelektrode und dem Zündleiter eine galvanische Verbindung zur Erfüllung beider Funktionen geschaffen. Besonders beruht eine solche Verbindung auf mehreren Elementen, die jeweils für sich allein genommen bereits eine elektrische Kontaktierung und eine mechanische Fixierung darstellen.

Bei einer sogenannten aktiv gespülten Vorkammer wird das Kraftstoff-Luft-Gemisch direkt in die Vorkammer zugeführt. Durch eine entsprechende Gestaltung des Strömungspfades wird erreicht, dass das in der Vorkammer verbliebene Restgas, d.h. Abgas von der Vorkammerzündung des vorausgegangenen Expansionstaktes aus dem Bereich der Elektroden und dem Bereich, über dem sich ein Zündunken ausbilden kann, entfernt wird. Diesen zur Konditionierung der Vorkammer dienenden Vorgang nennt man Spülen.

Bei einer passiven Spülung gelangt das zündfähige Kraftstoff-Luft-Gemisch über die Überströmungskanäle von der Hauptbrennkammer in die Vorkammer. Das Kraftstoff-Luft-Gemisch wird bekanntermaßen bereits mit einem gewissen Überdruck in die Hauptbrennkammer zugeführt. Verstärkt durch die aufgrund der Zylinderbewegung erfolgende Kompression ergibt sich im Zuge des Druckausgleichs über die Überströmungskanäle ein vergleichsweise hoher Zustrom von zündfähigem Kraftstoff-Luft-Gemisch in die Vorkammer. Demzufolge ist die nach Abschluss der Konditionierung weiterhin in der Vorkammer verbliebene Restgasmenge sehr viel kleiner als die Menge des neu hinzugeführten zündfähigen Kraftstoff-Luft-Gemisches. Wie leicht einsehbar, ist das Verdrängen von Restgasen innerhalb der Bereiche, in denen der Spannungsüberschlag, d.h. der Zündfunken auftreten kann, das sogenannte Spülen, von großer Wichtigkeit.

Alternativ kann die Zündelektrode scheibenförmig ausgestaltet werden oder kann die rahmenförmige Zündelektrode mittels eines scheibenförmigen Körpers fixiert und elektrisch leitend mit dem Zündleiter verbunden werden. Alternativ kann die Elektrode aus einem scheibenförmigen Grundkörper bestehen, dessen Aussenumfang mit einem Spezialmaterial z.B. einer Pt-Legierung beschichtet ist. In einem solchen Fall weist quasi die Beschichtung die Rahmenform auf.

Durch die Verwendung einer scheibenförmigen Elektrode muss das in die Vorkammer zuströmende zündfähige Gemisch zur Erreichung des oberhalb der Zündelektrode gelegenen Teilbereichs der Vorkammer gezwungenermaßen den Zwischenraum der Zünd- und der Massenelektrode passieren, was einer wirksamen Spülung zugute kommt.

Nach einer optionalen Modifikation der vorliegenden Erfindung weist eine solche scheibenförmige Zündelektrode mindestens eine von ihrer Mitte beabstandete Ausnehmung auf, die vorzugsweise kreisförmig, nierenförmig oder kreissegmentförmig ausgestaltet ist. Durch eine vorteilhafte Formung dieser mindestens einen Ausnehmung wird eine bessere Spülung erzielt. Dabei tritt also nicht nur das Gemisch an der umfangsseitigen Außenseite in dem Spalt zwischen der Zündelektrode und der Vorkammer in einen oberhalb der Zündelektrode liegenden Bereich ein, sondern kann dabei auch durch die in dem scheibenförmigen Körper vorhandenen Ausnehmungen in den darüber angeordneten Raum strömen. Das Verhindert die Gefahr, dass ein Teil des Restgases beim Zuströmen des zündfähigen Gas-Luft-Gemisches lediglich im Elektroden-nahen Bereich verwirbelt wird und tatsächlich aber gar nicht von dort beseitigt wird.

Vorzugsweise ist vorgesehen, dass die Ausnehmung eine Durchbrechung des scheibenförmigen Körpers ist, jedoch vollumfänglich von der Zündelektrode umgeben ist. Die Ausnehmung verändert demnach nicht den Außenumfang der scheibenförmigen Zündelektrode, sondern befindet sich vollständig innerhalb ihres Außenumfangs.

Weiter kann vorgesehen sein, dass mehrere Ausnehmungen vorhanden sind, die äquidistant zueinander in Umfangsrichtung der scheibenförmigen Zündelektrode angeordnet sind. Dies verbessert die Konditionierung der Vorkammer.

Nach einer weiteren vorteilhaften Modifikation der vorliegenden Erfindung kann vorgesehen sein, dass die scheiben- oder rahmenförmige Zündelektrode an ihrem Außenumfang in ihrer Dickenrichtung spitz zuläuft, vorzugsweise derart, dass sie von einem oberen und einem unteren Teilbereich ihres Außenumfangs schräg zu einer gemeinsamen Spitze hin zuläuft. Dabei kann die gemeinsame Spitze in der Mitte der Dicke der scheiben- oder rahmenförmigen Zündelektrode vorgesehen sein, sodass die Anschrägungswinkel der scheiben- oder rahmenförmigen Fläche von beiden flächigen Seiten aus gleich sind.

Spannungsüberschläge (Lichtbögen) treten bevorzugterweise aus bestehenden Spitzen und scharfen Kanten eines elektrisch leitfähigen Materials aus, weil an derartig geformten Oberflächen eine Feldstärkeüberhöhung vorliegt. Um nun eine Verschleißreduzierung an den Zündelektroden vorzusehen, ist eine möglichst niedrige Zündspannung beziehungsweise Überschlagsspannung von Vorteil. Läuft die Zündelektrode an ihrem Außenumfang spitz zu, besitzt also eine Keilform entlang des gesamten Umfangs der Zündelektrode, kann insgesamt mit einer geringeren Überschlagsspannung bzw. Zündspannung gearbeitet werden, die einen geringeren Verschleißgrad hervorruft.

Alternativ dazu, kann man bei gleicher Zündspannung einen wesentlich längeren Zündfunken erzeugen und damit die Zündfläche zum Entzünden des Gemisches erhöhen. Indem nun eine spitz zulaufende scheiben- oder rahmenförmige Zündelektrode weiter entfernt zu einer zugehörigen Massenelektrode angeordnet werden kann, ergibt sich ein wesentlich größerer Strömungsquerschnitt beim Umströmen der Zündelektrode in einem darüber liegenden Bereich, sodass ein Ausströmen eines verbrannten Gases durch Einströmen eines neuen zündfähigen Gemisches sehr viel leichter bewerkstelligt werden kann. Unterstützend wirkt dabei weiter die durch die Spitze beziehungsweise Kante hervorgerufene Verwirbelung beim Entlangströmen des zündfähigen Gemisches.

Vorzugsweise weist die Vorkammer eine zylindrisch geformte Ausnehmung auf, in der die scheiben- oder rahmenförmige Zündelektrode angeordnet ist, wobei die zylindrische Ausnehmung und die scheiben- oder rahmenförmige Zündelektrode koaxial zueinander ausgerichtet sind, sodass der minimale Abstand vom Außenumfang der Zündelektrode hin zur Innenwand der Vorkammer entlang des Außenumfangs der - oder rahmenförmigen Zündelektrode gleich ist.

Weiter kann nach der Erfindung vorgesehen sein, dass mehrere Überströmungskanäle vorhanden sind, die eine Verbindung der Vorkammer nach Außen erzeugen. Selbstverständlich ist dabei auch der Fall umfasst, dass nur ein Überströmungskanal vorhanden ist, der eine Verbindung der Vorkammer nach Außen erzeugt. Bei mehreren Überströmungskanälen ist es dabei von Vorteil, wenn diese in einer tangentialen oder schrägtangentialen Anordnung zur Längsachse, vorzugsweise der Symmetrieachse der Vorkammer angeordnet sind, sodass beim Ausströmen eines entflammten Gemisches aus der Vorkammer ein Sog erzeugt wird. Die Eintrittspunkte der Überströmungskanäle in die Vorkammer sind dabei also nicht radial zur Symmetrieachse oder zur Längsachse der Vorkammer ausgerichtet, sondern gehen von einem Kreis, der die Längsachse beziehungsweise die Symmetrieachse der Vorkammer als Mittelpunkt aufweist und der vorzugsweise senkrecht dazu steht, tangential oder schrägtangential ab. Eine schrägtangentiale Anordnung eines Überströmungskanals bedeutet, dass dessen Symmetrielinie mit einer Tangente an einen Kreis mit Mittelpunkt in der Symmetrieachse der Vorkammer eine tangential zu dem genannten Kreis orientierte Ebene aufspannt.

Vorteilhaft ist dies, da bei der scheiben- oder rahmenförmigen Zündelektrode auch der Zündfunke, also plasmaförmiges Brenngas-Luft-Gemisch, dem Sog, der durch die tangentiale Anordnung der Überströmungskanäle gebildet wird, ausgesetzt wird. Das ruft ein tendenzielles Wandern des Zündfunkens entlang der Sogrichtung hervor, sodass sich der Zündfunken während seines Bestehens in Richtung der Sogwirkung bewegt. Dies trägt zu einer Abschwächung des lokalen Verschleißes an den Elektrodenoberflächen (Zündelektrode und Massenelektrode) bei, und bewirkt durch die Bewegung des Zündfunkens zudem, dass ein größerer Bereich des entzündbaren Gemisches mit dem Zündfunken in Berührung kommt.

Nach einer weiteren Modifikation der vorliegenden Erfindung ist an der Innenwand der Vorkammer, die die Massenelektrode darstellt, eine Erhebung vorgesehen, vorzugsweise eine eine Spitze bildende Erhebung, die in ihrer Innenumfangsrichtung umlaufend ausgebildet ist und vorzugsweise auf gleicher Höhe wie die scheiben- oder rahmenförmige Zündelektrode angeordnet ist.

Demzufolge kann auch an der Innenwand der Vorkammer, also an der Massenelektrode eine Erhebung beziehungsweise scharfkantige Erhebung oder auch Spitze vorhanden sein, um eine Überschlagsspannung abzusenken und die damit einhergehenden Verschleißzustände abzumildern.

Weiter kann vorteilhafterweise vorgesehen sein, dass die Vorkammerzündvorrichtung eine Vorkammerkerze ist, die an einer Brennkraftmaschine lösbar befestigbar ist. Typischerweise verfügt eine solche Vorkammerkerze über ein Außengewinde, mit dem es lösbar an einem Motor befestigbar ist, sodass die Spitze der Vorkammerkerze, die Vorkammerkappe in einen Hauptbrennraum eines Zylinders hineinragt. Die Spitze weist dabei die Überströmungskanäle auf, sodass der Hauptbrennraum einer Brennkraftmaschine mit der in der Kerze angeordneten Vorkammer zusammenwirken kann.

Die Erfindung umfasst zudem eine Brennkraftmaschine mit einer Vorkammerzündvorrichtung nach einer der vorstehend beschriebenen Varianten.

Weitere Merkmale, Einzelheiten und Vorteile der vorliegenden Erfindung werden anhand der nachfolgenden Figurenbeschreibung ersichtlich. Es zeigen:
- Fig. 1:: eine Schnittansicht einer Vorkammerzündvorrichtung nach der Erfindung,
- Fig. 1A:: ein Diagramm zum Darstellen des Druckverlaufbereichs in einem Brennraum,
- Fig. 2a-b:: schematische Darstellungen der erfindungsgemäßen Elektrode,
- Fig. 3 a-c:: verschiedene Darstellungen eines Teilabschnitts unterschiedlicher erfindungsgemäßer Zündvorrichtungen,
- Fig. 4:: eine Schnittansicht im Querschnitt zur Darstellung einer tangentialen Anordnung von Überströmungskanälen,
- Fig. 5:: mehrere Schaubilder zur Darstellung einer sich aufgrund eines Sogs bewegenden Funkenstrecke,
- Fig. 6a:: eine erfindungsgemäße Zündelektrode mit spitz zulaufender Kante im Umfangsbereich in Gegenüberstellung zu einer herkömmlichen flachen Kante,
- Fig. 6b:: eine erfindungsgemäße Zündelektrode mit spitz zulaufender Kante im Umfangsbereich in Gegenüberstellung zu einer herkömmlichen flachen Kante mit Beschichtung,
- Fig. 6c:: eine erfindungsgemäße Zündelektrode mit spitz zulaufender Kante im Umfangsbereich in Gegenüberstellung zu einer herkömmlichen flachen Kante mit Beschichtung nach einer weiteren Ausführungsform,
- Fig. 7a:: eine erfindungsgemäße spitz zulaufende Kante einer Zündelektrode mit vergrößertem Abstand zu einer zugehörigen Massenelektrode in Gegenüberstellung mit einer herkömmlichen flachen und in ihrem Abstand nicht vergrößerten Zündelektrode,
- Fig. 7b:: eine erfindungsgemäße spitz zulaufende Kante einer Zündelektrode mit vergrößertem Abstand zu einer zugehörigen Massenelektrode in Gegenüberstellung mit einer herkömmlichen flachen und in ihrem Abstand nicht vergrößerten Zündelektrode einer weitere Ausführungsform,
- Fig. 8a:: eine Darstellung mit einer erfindungsgemäßen Zündelektrode, die in ihrem Umfangsbereich spitz zuläuft und mit ihrer Spitze auf eine Spitze an der Innenwand der Vorkammer gerichtet ist und eine Beschichtung aufweist, und
- Fig. 8b:: eine Darstellung mit einer erfindungsgemäßen beschichtungsfreien Zündelektrode, die in ihrem Umfangsbereich spitz zuläuft und mit ihrer Spitze auf eine Spitze an der Innenwand der Vorkammer gerichtet ist.

Fig. 1 zeigt eine Schnittdarstellung einer erfindungsgemäßen Vorkammerzündvorrichtung 1. Diese weist ein Gehäuse 22 auf, in dem eine Vorkammer 2 angeordnet ist. Die Vorkammer 2 ist dabei mit Ausnahme von Überströmungskanälen 7 vollständig von dem Gehäuse 22 umgeben. Innerhalb der Vorkammer 2 ist dabei eine Zündelektrode 3 angeordnet. Zwischen ihr und dem als Massenelektrode dienenden Gehäuse 22 kann ein Spannungsüberschlag erzeugt werden. Dabei strömen also Elektronen über den Spalt zwischen der Zündelektrode 3 und der Innenwand 21 der Vorkammer 2, sodass ein sich in der Vorkammer 2 befindliches, entzündbares Gemisch entflammt wird.

Typischerweise wird die Vorkammerzündvorrichtung 1 durch einen Zylinderblock 10 in einen Hauptbrennraum 11 eines Zylinders teilweise eingeführt, sodass die Spitze der Vorkammerzündvorrichtung 1, die sogenannte Vorkammerkappe mit ihren Überströmungskanälen 7 in einen Hauptbrennraum 11 eines Zylinders hineinragt. Durch eine Zuführung eines Kraftstoff-Luft-Gemisches in den Hauptbrennraum gelangt auch eine entsprechende Menge davon in die Vorkammer 2, da der Kompressionstakt des Zylinders den eingesprühten Kraftstoff über die Überströmungskanäle 7 in die Vorkammer 2 einführt. Zu einem gewünschten Zeitpunkt wird dann ein Zündfunken zwischen der Zündelektrode 3 und der Massenelektrode 21 erzeugt, die ein Entflammen des in der Vorkammer 2 befindlichen Gemisches bewirkt. Durch die Entflammung expandiert das Gemisch stark und schießt aus den Übertrömungskanälen 7 in den Hauptbrennraum, wo es aufgrund des Herausströmens des entflammten Gemisches aus den Überströmungskanälen 7 zu einem vergleichsweise gut reproduzierbaren und wohl koordinierten Entzünden des in der Hauptbrennkammer 11 befindlichen Gemisches kommt.

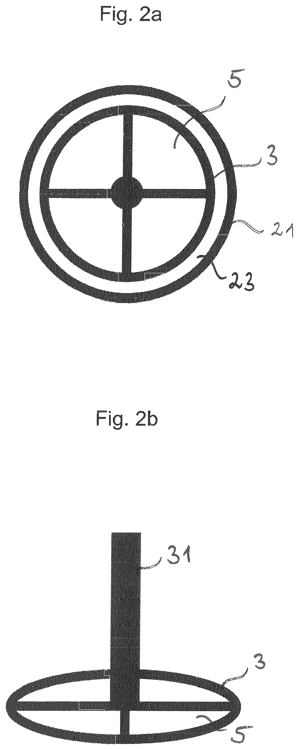

Fig. 2a zeigt eine Draufsicht auf die erfindungsgemäße Elektrode 3, die in ihrer Erscheinung einem Speichenrad ähnelt. Dabei ist also eine scheibenförmige Form mit Ausnehmungen 5 versehen, so dass ein äußerer Ring nur mit nach innen laufenden Stegen verbleibt. Zwischen dem Außenumfang und dem Innenumfang des Gehäuses befindet sich ein Spalt 23, über den sich der Zündfunke erstreckt. Voraussetzung hierfür ist, das Vorliegen einer ausreichend hohen Spannung zur Überwindung des Spaltes 23.

Fig. 2b zeigt eine Perspektivansicht, der Elektrode. Man erkennt einen mittig aus der Zündelektrode 3 herausragenden Abschnitt 31, der für das Zuleiten der Spannung hin zum Außenumfang der Elektrode dient.

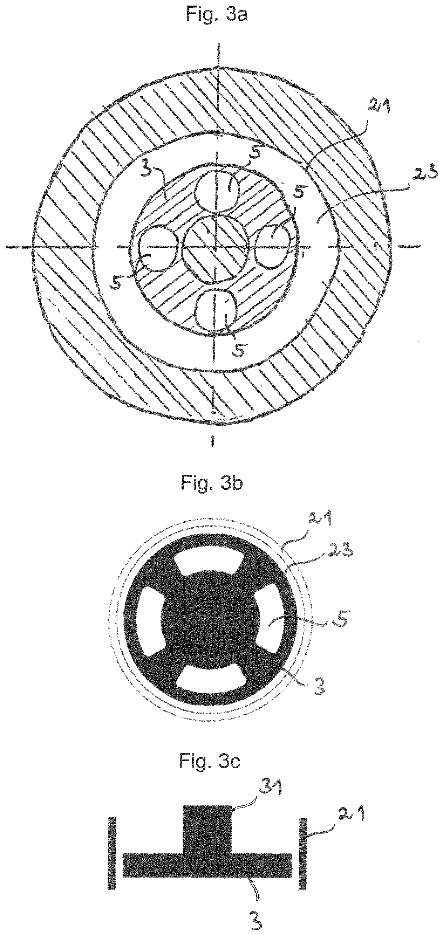

Fig. 3a zeigt eine Querschnittsdarstellung auf Höhe der Zündelektrode 3, die auf einen scheibenförmigen Grundkörper aufgebracht ist bzw. als scheibenförmige Elektrode ausgeführt ist. Ist dabei die die Vorkammer bildende Ausnehmung von zylindrischer Form und ist eine kreisförmige Zündelektrode 3 koaxial zu der Zylinderform der Vorkammer 2 angeordnet, so ist ein zwischen der Innenwand 21 und dem Außenumfang der kreisförmigen Zündelektrodenscheibe 3 bestehender minimaler Abstand in der Umfangsrichtung der Zündelektrode identisch. Daher kann beim Anlegen einer entsprechen hohen Spannung an die Zündelektrode 3 der Zündfunke an jeder Stelle mit einem minimalen Abstand zur Innenwand 21 der Vorkammer 2 auftreten. Da im Gegensatz zu den vorbekannten Zündelektroden dadurch eine sehr viel größere Fläche zum Ausprägen einer Funkenstrecke bereitsteht, verteilen sich die Abnutzungserscheinungen über eine größere Fläche, sodass ein Austausch der Zündelektrode beziehungsweise der Vorkammerzündvorrichtung 1 erst nach einer sehr viel längeren Nutzungsdauer notwendig wird.

Weiter erkennt man Ausnehmungen 5, die in der Zündelektrode 3 angeordnet sind. Durch diese Ausnehmungen 5 kann ein zu entzündendes Gasgemisch oder auch ein bereits entzündetes Gasgemisch hindurchtreten, sodass bei einem Einführen eines zu entzündenden Gasgemisches ein besonders wirkungsvolles Spülen erreicht wird. Vorliegend erkennt man zudem, dass die insgesamt vier dargestellten Ausnehmungen 5 äquidistant zueinander angeordnet sind, jeweils also den gleichen Abstand in der kreisförmigen Zündelektrodenscheibe aufweisen.

Figuren 3b-3c zeigen eine weitere alternative Umsetzung der Erfindung. So sind dabei anstelle von kreisförmigen Ausnehmungen 5, wie sie in Fig. 3a eingezeichnet waren, nun nierenförmige Ausnehmungen 5 zu sehen, die sich ebenfalls äquidistant entlang des Umfangs der kreisförmigen Zündelektrodenscheibe 3 erstrecken. Für die Erfindung ist dabei die Gleichverteilung entlang des Umfangs von Vorteil, jedoch ist es von der Erfindung auch umfasst, dass die mehreren Ausnehmungen einen unregelmäßigen Abstand zueinander haben. Man erkennt, dass sowohl die kreisförmige Zündelektrodenscheibe 3 als auch ein ringförmiger Abschnitt der Vorkammer, der die Massenelektrode 21 bildet, koaxial zueinander ausgerichtet sind. Zwischen dem Außenumfang der Zündelektrode und dem Innenumfang der Massenelektrode 21 ist ein Spalt 23 angeordnet, über den sich beim bei Anlegen einer entsprechenden Zündspannung an der Zündelektrode 3 ein Zündfunken ertreckt. Der dabei mittig aus der Zündelektrode 3 herausragende Abschnitt 31 (vgl. Fig. 3c) stellt dabei einen elektrischen Anschluss zwischen dem Zündleiter und der scheibenförmigen Zündelektrode 3 dar.

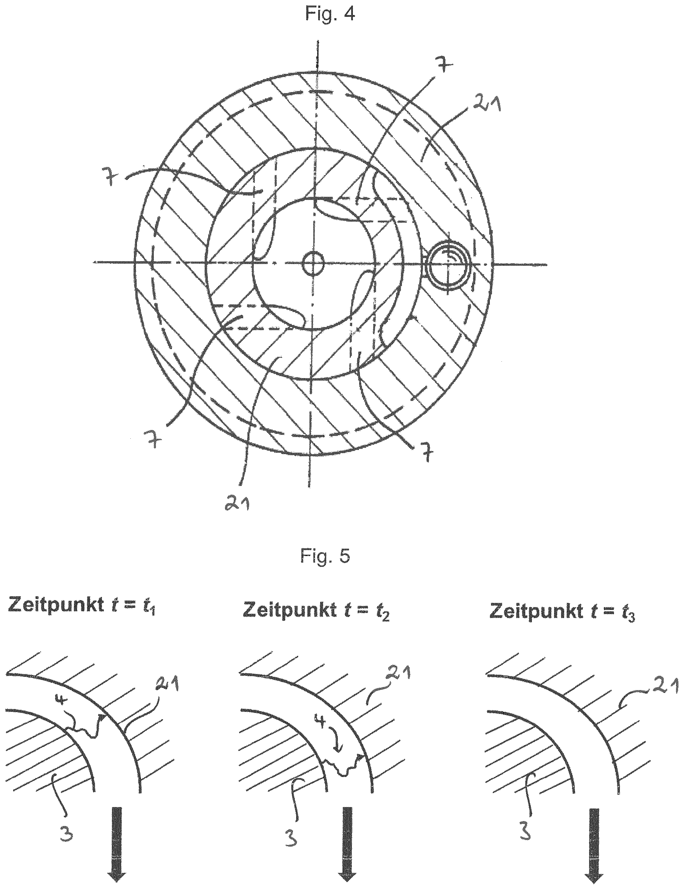

Fig. 4 ist eine Querschnittsansicht durch die Vorkammerzündvorrichtung 1, die dazu dient, eine tangentiale Anordnung von Überströmungskanälen 7 zu erläutern. So kann es vorteilhaft sein, die Überströmungskanäle 7, die eine Verbindung der Vorkammer 2 zu einem Hauptbrennraum 11 eines Zylinders darstellen, abweichend von einer radialen Ausrichtung anzuordnen. Dabei wird gemäß der dargestellten tangentialen Anordnung die Eintrittsöffnung der Überströmungskanäle 7 in das Innere der Vorkammer 2 so gewählt, dass diese tangential an einen Kreis angreifen, dessen Mittelpunkt in der Längsachse beziehungsweise Symmetrieachse der Vorkammer 2 liegt. Durch den Überdruck des in den Hauptbrennraum zugeleiteten zündfähigen Gemisches und vor allem durch die aufgrund der Kolbenbewegung in Richtung zum oberen Totpunkt des Zylinders erfolgende Kompression des zündfähigen Gemisches strömt ein Teil davon in die Vorkammer ein. Aufgrund der tangentialen Anordnung der Überströmungskanäle 7 bildet sich bei diesem Einströmen ein Wirbel im Inneren der Vorkammer 2 aus, der für eine besonders wirkungsvolle Spülung der Elektroden-nahen Bereiche sorgt. Im Umkehrschluss entsteht aber auch bei einem Entzünden des Gemisches in der Vorkammer 2 ein Sog, der zu einem raschen Austreten des entflammten Gemisches aus der Vorkammer 2 führt.

Fig. 5 zeigt den Einfluss des gerade eben beschriebenen Soges bei einem entflammten Gemisch in der Vorkammer 2 auf einen vorliegenden Zündfunken 4, der einen zusätzlichen Vorteil bietet. Die Sogwirkung ist dabei in jeder der drei dargestellten Zeichnungen mit einem schwarzen Pfeil schematisch dargestellt. Geht man nun von einer Draufsicht auf einen Querschnitt eines Teilbereichs der Zündelektrode 3 sowie eines zugehörigen Bereichs der Massenelektrode 21 aus, wirkt der Sog also im Uhrzeigersinn. Zum Beginn einer Funkenstrecke, also zum Zeitpunkt t₁, wird das Gemisch entflammt und aufgrund der daraus folgenden Expansion entsteht die aufgrund der tangentialen Anordnung der Überströmungskanäle hervorgerufene Sogwirkung. Diese wirkt auch auf den aufrechterhaltenen Zündfunken 4, sodass sich diese entsprechend der Sogwirkung bewegt (vgl. Zeitpunkt t₂). Der Zeitpunkt, zu dem die Funkenstrecke 4 erloschen ist, wird dann in der rechten Darstellung zum Zeitpunkt t₃ gezeigt.

Indem der Sog nicht nur auf das Gemisch, sondern auch auf den Zündfunken 4 wirkt, wird der Bereich, in dem das Gemisch mit einem Funken in Berührung kommt, vergrößert. Dies führt zu einer gleichmäßigeren Entflammung des in der Vorkammer 2 enthaltenen Gemisches, sodass man dem Idealzustand eines gleichzeitigen Entflammens des in der Vorkammer befindlichen Gemisches näher kommt.

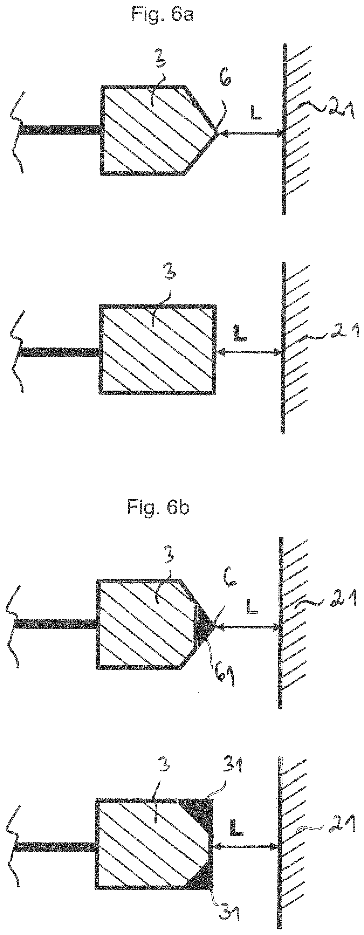

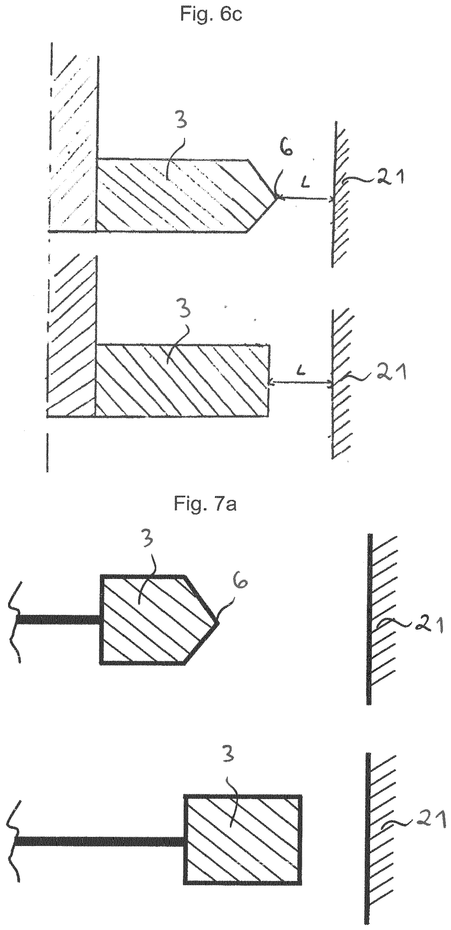

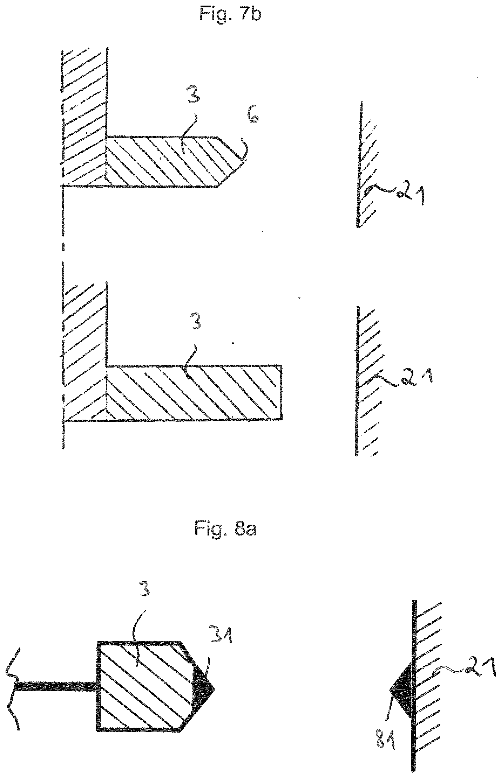

Fig. 6a zeigt dabei in ihrem oberen Bereich eine vorteilhafte Weiterbildung der vorliegenden Erfindung. Man erkennt, dass die Zündelektrode 3 in ihrem Außenumfang spitz zuläuft und eine Kante oder eine Spitze 6 bildet und dort scharfkantiger als an den Eckpunkten zu den flächigen Seiten ist. Dabei wird also die Zündelektrode, hier in Form eines Rahmens von jeder ihrer beiden flächigen Seiten angeschrägt zu einer gemeinsamen Spitze geführt, die in der Mitte der Dicke der Zündelektrode 3 liegt. Demnach ist also der Anschrägwinkel von der einen flächigen Seite identisch zu dem Anschrägwinkel der anderen flächigen Seite. Da Spannungsüberschläge, also die Erzeugung von Lichtbögen, aus spitzen und scharfen Kanten bevorzugt austreten, kann mit so einer Ausgestaltung die erforderliche Zündspannung beziehungsweise Überschlagsspannung reduziert werden. Alternativ kann bei gleichbleibender Zünd- beziehungsweise Überschlagsspannung der Abstand zu der Massenelektrode 21 vergrößert werden. In der unteren Darstellung tritt der Funkenüberschlag typischerweise auch an einer der beiden Kanten auf, die den Übergang zur Stirnseite der Scheibe darstellen. Dies ist ebenfalls der an der Kante erhöhten Feldstärke geschuldet. Exemplarisch ist in Fig. 7a und Fig. 7b dargestellt, dass die mit der Spitze 6 versehene Zündelektrode 3 einen größeren Abstand zu der Massenelektrode 21 aufweist als die die beiden flächigen Seiten der Zündelektrode flach verbindende Ausführung, welche unten dargestellt ist.

In der Fig. 6b ist dabei eine Beschichtung 61 dargestellt, die an den Bereichen aufgebracht ist, an denen mit hoher Wahrscheinlichkeit ein Zündfunken auftritt. Diese Beschichtung ist bspw. eine Platin-Beschichtung 61 und vermindert die Abnutzungseffekte, die normalerweise dort auftreten.

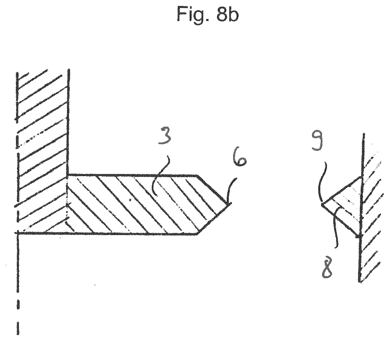

Der Effekt, wonach ein Lichtbogen bevorzugt aus einer Spitze oder einer scharfkantigen Erhebung austritt, kann darüber hinaus zu der in Fig. 8a und Fig. 8b gezeigten Ausführungsform der vorliegenden Erfindung führen. Hier ist nicht nur die Zündelektrode 6 mit einer Spitze versehen, sondern auch die Massenelektrode 21 weist eine Erhebung 8 auf, die eine Spitze 9 besitzt. Die beiden Spitzen 6, 9 der beiden Elektroden 3, 21 müssen nicht auf der gleichen Höhe sein. Die an der Innenwand gebildete Spitze 9 verläuft dabei entlang des gesamten Innenumfangs der Vorkammer um die scheibenförmige Zündelektrode herum. Fig. 8a zeigt dabei erneut die Beschichtung 31, 81, die dort angebracht wird, wo ein Zündfunken bildet.

## Patentansprüche

1. Vorkammerzündvorrichtung (1) zum Entzünden eines Kraftstoff-Luft-Gemisches, umfassend:
eine Vorkammer (2) zum Aufnehmen eines Kraftstoff-Luft-Gemisches, und
eine Zündelektrode (3), die in der Vorkammer (2) angeordnet ist, wobei
eine Innenwand (21) der Vorkammer (2) eine Massenelektrode (21) für die Zündelektrode (3) darstellt, so dass ein Spannungsüberschlag (4) zwischen der Massenelektrode (21) und der Zündelektrode (3) erzeugbar ist,
**dadurch gekennzeichnet, dass**
die Zündelektrode (3) die Form eines Rahmens, vorzugsweise eines Rings, besitzt.

2. Vorkammerzündvorrichtung (1) nach Anspruch 1, wobei die Zündelektrode (3) die Form einer kreisförmigen Scheibe aufweist.

3. Vorkammerzündvorrichtung (1) nach einem der vorhergehenden Ansprüche, wobei die Massenelektrode (21) eine Ringform aufweist, und vorzugweise die Zündelektrode (3) koaxial zur Massenelektrode (21) angeordnet ist.

4. Vorkammerzündvorrichtung (1) nach einem der vorhergehenden Ansprüche, wobei die scheibenförmige Zündelektrode (3) mindestens eine von ihrer Mitte beabstandete Ausnehmung (5) aufweist, die vorzugsweise kreisförmig, nierenförmig oder kreissegmentförmig ausgestaltet ist.

5. Vorkammerzündvorrichtung (1) nach Anspruch 4, wobei die Ausnehmung (5) eine Durchbrechung der Zündelektrode (3) ist, jedoch vollumfänglich von der Zündelektrode (3) umgeben ist.

6. Vorkammerzündvorrichtung (1) nach einem der Ansprüche 4 oder 5, wobei mehrere Ausnehmungen (5) vorhanden sind, die äquidistant zueinander in Umfangsrichtung der scheibenförmigen Zündelektrode (3) angeordnet sind.

7. Vorkammerzündvorrichtung (1) nach einem der vorhergehenden Ansprüche, wobei die scheibenförmige Zündelektrode (3) an ihrem Außenumfangsbereich in ihrer Dickenrichtung spitz zuläuft, vorzugsweise derart, dass sie von jeder ihrer beiden ebenen flächigen Seiten schräg zu einer gemeinsamen Spitze (6) hin zuläuft.

8. Vorkammerzündvorrichtung (1) nach einem der vorhergehenden Ansprüche, wobei
die Vorkammer (2) eine zylindrische Ausnehmung (22) aufweist, in der die scheibenförmige Zündelektrode (3) angeordnet ist, und
die zylindrische Ausnehmung (22) und die scheibenförmige Zündelektrode (3) koaxial zueinander ausgerichtet sind, so dass der minimale Abstand vom Außenumfang der Zündelektrode (3) hin zur Innenwand (21) der Vorkammer (2) entlang des Außenumfangs der scheibenförmigen Zündelektrode (3) gleich ist.

9. Vorkammerzündvorrichtung (1) nach einem der vorhergehenden Ansprüche, wobei
mehrere Überströmungskanäle (7), die eine Verbindung der Vorkammer (2) nach außen erzeugen, vorhanden sind, und
die mehreren Überströmungskanäle (7) in einer tangentialen oder schrägtangentialen Anordnung zur Längsachse, vorzugsweise der Symmetrieachse der Vorkammer (2) angeordnet sind, so dass beim Ausströmen eines entflammten Gemisches aus der Vorkammer (2) ein Sog erzeugt wird.

10. Vorkammerzündvorrichtung (1) nach einem der vorhergehenden Ansprüche, wobei an der Innenwand (21) der Vorkammer (2) ein Erhebung (8) vorgesehen ist, vorzugsweise eine eine Spitze (9) bildende Erhebung, die in Umfangsrichtung umlaufend ausgebildet ist und vorzugsweise auf gleicher Höhe wie die scheibenförmige Zündelektrode (3) angeordnet ist.

11. Vorkammerzündvorrichtung (1) nach Anspruch 10, wobei die Erhebung (8) einer Spitze (6) der Zündelektrode (3) gegenübersteht, vorzugsweise so, dass beide Spitzen (6, 9) auf gleicher Höhe angeordnet sind und der minimale Abstand von Zündelektrode (3) zu Massenelektrode (21) von der Spitze (6) der Zündelektrode (3) zu der Erhebung (8) an der Innenwand (21) der Vorkammer (2) verläuft.

12. Vorkammerzündvorrichtung (1) nach einem der vorhergehenden Ansprüche, wobei eine vorhandene Erhebung im Gesamten oder in dem die Spitze enthaltenden Teilbereich als separates rondenförmiges und einen in seiner Umfangsrichtung keilförmigen Querschnitt aufweisendes Bauteil ausgeführt ist und dieses einen hohen elektrischen Leitwert aufweisend mit dem scheibenförmigen oder rahmenförmigen Teil verbunden ist.

13. Vorkammerzündvorrichtung (1) nach einem der vorhergehenden Ansprüche, wobei eine vorhandene Erhebung im Gesamten oder in dem die Spitze enthaltenden Teilbereich als separates rondenförmiges und einen in seiner Umfangsrichtung keilförmigen Querschnitt aufweisendes Bauteil ausgeführt ist und dieses einen hohen elektrischen Leitwert aufweisend mit der Innenseite der Mantelfläche des Vorkammergehäuses verbunden ist.

14. Vorkammerzündvorrichtung (1) nach einem der Ansprüche 1 bis 11, wobei eine vorhandene Erhebung zumindest in dem die Spitze beinhaltenden Endbereich mit einem Spezialmaterial z.B. einer Pt-Legierung beschichtet ist.

15. Vorkammerzündvorrichtung (1) nach einem der oder beiden der unmittelbar vorherghenden Ansprüche, wobei die Beschichtung mittels Auftragschweissen, insbesondere Laserauftragschweissen erzeugt wird.

16. Vorkammerzündvorrichtung (1) nach einem der vorhergehenden Ansprüche, wobei die Vorkammerzündvorrichtung (1) eine Vorkammerkerze ist, die an einer Brennkraftmaschine lösbar befestigbar ist.

17. Brennkraftmaschine mit einer Vorkammerzündvorrichtung (1) nach einem der vorhergehenden Ansprüche, insbesondere eine Brennkraftmaschine, die mit Gas betrieben wird.
